# EUROPÄISCHE PATENTSCHRIFT

(11) **EP 1 763 544 B1**
(45) Veröffentlichungstag und Bekanntmachung des Hinweises auf die Patenterteilung: **15.08.2007**
(21) Anmeldenummer: 05768177.7
(22) Anmeldetag: 23.06.2005
(51) Int. Cl.: C08F 8/28, C08F 8/14, C08F 218/10, C08F 216/06

(54) **WEICH-MODIFIZIERTE POLYVINYLACETALHARZE**
SOFT-MODIFIED POLYVINYL ACETAL RESINS
RESINES DE POLYVINYLACETAL PLASTIFIEES

(30) Priorität: 01.07.2004 DE 102004031969
(43) Veröffentlichungstag der Anmeldung: 21.03.2007
(73) Patentinhaber: Wacker Polymer Systems GmbH & Co. KG, 84489 Burghausen (DE)
(72) Erfinder: LUMPP, Andreas, 13084-190 Campinas S.P (BR)
(74) Vertreter: Schuderer, Michael
(86) Internationale Anmeldenummer: PCT/EP2005/006819
(87) Internationale Veröffentlichungsnummer: WO 2006/002831

(56) Entgegenhaltungen:
- EP-A- 1 180 529
- DE-A1- 10 242 417

## Beschreibung

Die Erfindung betrifft weich-modifizierte Polyvinylacetalharze, ein Verfahren zu deren Herstellung sowie deren Verwendung.

Die Herstellung von Polyvinylacetalen, aus den entsprechenden Polyvinylalkoholen durch polymeranaloge Umsetzung mit den entsprechenden Aldehyden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat - > Polyvinylalkohol -> Polyvinylacetal) hergestellt, wobei Produkte resultieren, welche neben Vinylacetalgruppen noch Vinylalkohol- und Vinylacetat-Einheiten enthalten. Im folgenden werden unter modifizierten Polyvinylacetalen solche verstanden, welche neben den genannten drei Einheiten, weitere Einheiten enthalten. Kommerzielle Bedeutung haben vor allem Polyvinylformal, Polyvinylacetacetal und Polyvinylbutyral erlangt.

In bestimmten Anwendungen von Polyvinylacetalharzen besteht die Anforderung diese weichzumachen, beispielsweise für die Anwendung als Folie in Sicherheitsgläsern. Aus dem Stand der Technik ist dazu bekannt das Polyvinylbutyral mit Weichmachern zu versetzen, wie z.B. Triethylenglykol-di-n-heptanoat, Phthalsäureestern von Alkoholen mit 6 bis 10 C Atomen, Tri-(2-ethylhexyl)phosphat und Trikresylphosphat. Teilweise besteht nur eine begrenzte Mischbarkeit der Weichmacher mit den Acetalen, teilweise sublimieren die Weichmacher mit dem Altern und verlieren so ihre plastifizierende Wirkung, teilweise werden die Weichmacher in Kontakt mit Lösemittel extrahiert. In allen Fällen sind Eigenschaftsveränderungen zu beobachten. In der EP-A 394884 wird die innere Weichmachung mittels Acetalisierung mit Oxyethylenaldehyden beschrieben. Nachteilig ist dabei eine Erniedrigung der Hydrophobie des Polyvinylacetals.

Es bestand daher die Aufgabe weich-modifiziertes Polyvinylacetalharz zur Verfügung zu stellen, ohne die Notwendigkeit Additive wie Weichmacher dem Polyvinylacetal zuzumischen.

Gegenstand der Erfindung sind weich-modifizierte Polyvinylacetalharze erhältlich durch Verseifung von Copolymeren aus Vinylacetat und einem oder mehreren tertiären Vinylestern von alpha-verzweigten Monocarbonsäuren mit 9 bis 15 C-Atomen, welche 5 bis 60 Gew.-%, bezogen auf das Gesamtgewicht des Copolymers, an tertiärem Vinylester enthalten, und anschließende Acetalisierung der Vinylalkohol-Einheiten aufweisenden Verseifungsprodukte mit einem oder mehreren aliphatischen Aldehyden mit 1 bis 6 C-Atomen.

Bevorzugte tertiäre Vinylester von alpha-verzweigten Monocarbonsäuren mit 9 bis 15 C-Atomen sind solche mit 9 bis 11 C-Atomen, wie VeoVa9^{R}, VeoVa10^{R} und VeoVa11^{R} (Handelsnamen der Firma Resolution Performance Products). Besonders bevorzugt werden tertiäre Vinylester von alpha-verzweigten Monocarbonsäuren mit 10 C-Atomen wie VeoVa10^{R}. Vorzugsweise enthalten die Copolymerisate von Vinylacetat und tertiärem Vinylester 30 bis 50 Gew.-% an tertiärem Vinylester, bezogen auf das Gesamtgewicht des Copolymers.

Geeignete aliphatische Aldehyde mit 1 bis 6 C-Atomen sind beispielsweise Formaldehyd, Acetaldehyd, Propionaldehyd und Butyraldehyd. Bevorzugt werden Acetaldehyd und Butyraldehyd sowie deren Gemische.

Die weich-modifizierten Polyvinylacetale enthalten vorzugsweise
a) 20 bis 70 Gew.-% Vinylacetal-Einheiten,
b) 5 bis 30 Gew.-% Vinylalkohol-Einheiten,
c) 5 bis 60 Gew.-% tert. Vinylester-Einheiten, und
d) 0.5 bis 10 Gew.-% Vinylacetat-Einheiten,
wobei sich die Angaben in Gew.-% jeweils auf 100 Gew.-% aufaddieren.

Die am meisten bevorzugten Polyvinylacetale enthalten 40 bis 60 Gew.-% Vinylacetal-Einheiten a), 10 bis 25 Gew.-% Vinylalkohol-Einheiten b), 30 bis 50 Gew.-% tert. Vinylester-Einheiten c), und 1 bis 5 Gew.-% Vinylacetat-Einheiten d).

Gegebenenfalls können die Polyvinylacetale noch 1 bis 5 Gew.-% weitere Monomereinheiten enthalten. Beispiele hierfür sind carboxylfunktionelle Comonomere wie Acrylsäure, Methacrylsäure, Crotonsäure und amidfunktionelle Comonomere wie Acrylamid, Methacrylamid.

Ein weiterer Gegenstand der Erfindung ist ein Verfahren zur Herstellung von weich-modifizierten Polyvinylacetalen durch Verseifung von Copolymeren aus Vinylacetat und einem oder mehreren tertiären Vinylestern von alpha-verzweigten Monocarbonsäuren mit 9 bis 15 C-Atomen, welche 5 bis 60 Gew.-% an tertiärem Vinylester enthalten, und anschließende Acetalisierung der Vinylalkohol-Einheiten aufweisenden Verseifungsprodukte mit einem oder mehreren aliphatischen Aldehyden mit 1 bis 6 C-Atomen unter Säurekatalyse in wässrigem und/oder organischem Milieu.

Zur Herstellung der weich-modifizierten Polyvinylacetale werden in einem ersten Schritt Vinylacetat und der Anteil an tertiärem Vinylester copolymerisiert. Gegebenenfalls können noch 1 bis 5 Gew.-%, bezogen auf das Gesamtgewicht der Comonomere, weitere Monomere wie carboxylgruppen- und/oder amidgruppenhaltige Comonomere copolymerisiert werden.

Die Polymerisation erfolgt in bekannter Weise, durch Suspensionspolymerisation, oder vorzugsweise durch Substanzpolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 60°C bis 100°C durchgeführt und durch Zugabe gängiger Initiatoren radikalisch initiiert. Beispiele für gängige Initiatoren sind Percarbonate wie Cyclohexylperoxidicarbonat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Vorzugsweise wird ein Molekulargewicht (Gewichtsmittel Mw) von 5000 bis 100000 eingestellt. Nach Abschluß der Polymerisation wird das Lösungsmittel sowie gegebenenfalls überschüssiges Monomer und Regler abdestilliert.

Die Verseifung der Vinylacetat-Einheiten erfolgt in an sich bekannter Weise, zum Beispiel nach dem Band- oder Kneterverfahren, im Alkalischen oder Sauren unter Zugabe von Säure oder Base. Vorzugsweise wird das tert. Vinylester-Vinylacetat-Copolymer in Alkohol, beispielweise Methanol, unter Einstellen eines Feststoffgehalts von 30 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Acetateinheiten eingesetzt. Die Hydrolyse wird bei Temperaturen von 30°C bis 60°C durchgeführt. Nach Abschluß der Hydrolyse wird das Lösungsmittel gegebenenfalls abdestilliert.

Die verseiften Copolymere haben einen Rest-Vinylester-Gehalt von vorzugsweise 5 bis 70 Gew.-%, bezogen auf das Gesamtgewicht des Copolymers.

Zur Acetalisierung werden die verseiften tert.-Vinylester-Vinylacetat-Copolymere vorzugsweise in wässrigem Medium aufgenommen. Üblicherweise wird ein Festgehalt der wässrigen Lösung von 5 bis 30 Gew.-% eingestellt. Die Acetalisierung erfolgt in Gegenwart von sauren Katalysatoren wie Salzsäure, Schwefelsäure oder Phosphorsäure. Vorzugsweise wird durch Zugabe von 20 %-iger Salzsäure der pH-Wert der Lösung auf Werte < 1 eingestellt.

Nach Zugabe des Katalysators wird die Lösung auf vorzugsweise -10°C bis +30°C abgekühlt und die Acetalisierungsreaktion durch Zugabe des Aldehyds gestartet. Die Zugabemenge richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration isoliert.

Mit der erfindungsgemäßen Verfahrensweise werden Polyvinylacetale zugänglich, welche ohne den Zusatz von Weichmacher eine deutlich niedrigere Glasübergangstemperatur Tg aufweisen.

Die weich-modifizierten Polyvinylbutyrale finden Verwendung als Folie in Sicherheitsgläsern und als akustische Folie, als Bindemittel in Druckfarben, als Bindemittel in Primern, als Bindemittel in Korrosionsschutzmitteln, als Bindemittel in der Keramikindustrie, speziell als Binder für keramische Grünkörper. Zu nennen ist auch der Einsatz als Bindemittel für Keramikpulver und Metallpulver im Spritzguß (powder injection molding), als Bindemittel für Glasfaser, und als Bindemittel für die Innenbeschichtung von Dosen, gegebenenfalls in Kombination mit Vernetzern wie Epoxidharzen.

Die nachfolgenden Beispiele dienen zur weiteren Erläuterung der Erfindung:

### Beispiel 1:

In einem 4-1 Reaktor, mit Rückflußkühler, Dosiereinrichtungen und einem Ankerrührer, wurden 200 g eines Copolymeren aus Vinylacetat und VeoVa10^{R} (Gew.-Verhältnis 70/30) in 900 g Methanol bei 60°C gelöst. Nachdem alles gelöst war, wurden 8 ml einer 45 %-igen methanolischen NaOH Lösung dosiert. Nach 2 Stunden wurde mit konz. Essigsäure auf einen pH von ca. 7 eingestellt.
Anschließend wurden im selben Reaktionsgefäß 100 g Butyraldehyd zudosiert. Nach Zugabe von 167 g einer 15 %-igen methanolischen Schwefelsäure-Lösung wurde noch 2 Stunden unter Rückfluß gekocht und der Ansatz mittels Zugabe einer 10 %-igen NaOH-Lösung neutralisiert. Das Gemisch aus Lösemittel und Butyraldehyd wird destillativ entfernt. Die fast erstarte Schmelze wurde in Ethanol (wahlweise kann auch Methanol verwendet werden) gelöst, wobei der Festgehalt auf 10 % eingestellt wurde. Danach erfolgte ein Fällungsschritt. Die Fälltemperatur betrug -1°C zu Beginn und wurde während des Fällens auf -5°C abgesenkt. Es wurden hierzu ca. 600 ml der 10 %-igen Lösung in 4 l einer KHCO₃-Lösung (0.2 %-ig, pH = 8.5) getropft. Das Produkt wurde abgesaugt und getrocknet.
Es wurde ein Polyvinylbutyral mit 52 Gew.-% Vinylbutyral-Einheiten, 32 Gew.-% VeoValO-Einheiten, 15 Gew.-% Vinylalkohol-Einheiten, und 1 Gew.-% Vinylacetat-Einheiten erhalten. Die Glasübergangstemperatur Tg betrug 46°C.

### Beispiel 2:

Es wurde analog Beispiel 1 vorgegangen, mit dem Unterschied, dass 200 g eines Copolymeren aus Vinylacetat und VeoVa10^{R} (Gew.-Verhältnis 50/50) als Edukt eingesetzt wurden.
Es wurde ein Polyvinylbutyral mit 32 Gew.-% Vinylbutyral-Einheiten, 57 Gew.-% VeoVa1O-Einheiten, 10 Gew.-% Vinylalkohol-Einheiten, und 1 Gew.-% Vinylacetat-Einheiten erhalten. Die Glasübergangstemperatur Tg betrug 31°C.

### Beispiel 3:

Es wurde analog Beispiel 1 vorgegangen, mit dem Unterschied, dass 200 g eines Copolymeren aus Vinylacetat und VeoVa9^{R} (Gew.-Verhältnis 50/50) als Edukt eingesetzt wurden.
Es wurde ein Polyvinylbutyral mit 30 Gew.-% Vinylbutyral-Einheiten, 53 Gew.-% VeoVa9-Einheiten, 16 Gew.-% Vinylalkohol-Einheiten, und 1 Gew.-% Vinylacetat-Einheiten erhalten. Die Glasübergangstemperatur Tg betrug 61°C.

### Beispiel 4:

Es wurde analog Beispiel 1 vorgegangen, mit dem Unterschied, dass 200 g eines Copolymeren aus Vinylacetat und VeoVa9^{R} (Gew.-Verhältnis 30/70) als Edukt eingesetzt wurden.
Es wurde ein Polyvinylbutyral mit 47 Gew.-% Vinylbutyral-Einheiten, 36 Gew.-.% VeoVa9-Einheiten, 16 Gew.-% Vinylalkohol-Einheiten, und 1 Gew.-% Vinylacetat-Einheiten erhalten. Die Glasübergangstemperatur Tg betrug 65°C.

### Vergleichsbeispiel 5:

Handelsübliches Polyvinylbutyral (Pioloform BR18) mit 80 Gew.-% Vinylbutyral-Einheiten, 18 Gew.-% Vinylalkohol-Einheiten, und 2 Gew.-% Vinylacetat-Einheiten. Die Glasübergangstemperatur Tg beträgt 71°C.

## Patentansprüche

1. Weich-modifizierte Polyvinylacetalharze erhältlich durch Verseifung von Copolymeren aus Vinylacetat und einem oder mehreren tertiären Vinylestern von alpha-verzweigten Monocarbonsäuren mit 9 bis 15 C-Atomen, welche 5 bis 60 Gew.-%, bezogen auf das Gesamtgewicht der Monomere, an tertiärem Vinylester enthalten, und anschließende Acetalisierung der Vinylalkohol-Einheiten aufweisenden Verseifungsprodukte mit einem oder mehreren aliphatischen Aldehyden mit 1 bis 6 C-Atomen.

2. Weich-modifizierte Polyvinylacetalharze nach Anspruch 1, **dadurch gekennzeichnet, dass** als tertiäre Vinylester von alpha-verzweigten Monocarbonsäuren solche mit 9 bis 11 C-Atomen eingesetzt werden.

3. Weich-modifizierte Polyvinylacetalharze nach Anspruch 1 oder 2, **dadurch gekennzeichnet, dass** zur Acetalisierung Acetaldehyd, Butyraldehyd oder deren Gemische eingesetzt werden.

4. Weich-modifizierte Polyvinylacetalharze nach Anspruch 1 bis 3, enthaltend
a) 20 bis 70 Gew.-% Vinylacetal-Einheiten,
b) 5 bis 30 Gew.-% Vinylalkohol-Einheiten,
c) 5 bis 60 Gew.-% tert. Vinylester-Einheiten, und
d) 0.5 bis 10 Gew.-% Vinylacetat-Einheiten,
wobei sich die Angaben in Gew.-% jeweils auf 100 Gew.-% aufaddieren.

5. Weich-modifizierte Polyvinylacetalharze nach Anspruch 1 bis 4, **dadurch gekennzeichnet, dass** noch 1 bis 5 Gew.-%, bezogen auf das Gesamtgewicht der Comonomere, carboxylgruppen- und/oder amidgruppenhaltige Comonomere copolymerisiert werden.

6. Verfahren zur Herstellung von weich-modifizierten Polyvinylacetalen gemäß Anspruch 1 bis 5 durch Verseifung von Copolymeren aus Vinylacetat und einem oder mehreren tertiären Vinylestern von alpha-verzweigten Monocarbonsäuren mit 9 bis 15 C-Atomen, welche 5 bis 60 Gew.-% an tertiärem Vinylester enthalten, und anschließende Acetalisierung der Vinylalkohol-Einheiten aufweisenden Verseifungsprodukte mit einem oder mehreren aliphatischen Aldehyden mit 1 bis 6 C-Atomen unter Säurekatalyse in wässrigem und/oder organischem Milieu.

7. Verwendung der weich-modifizierten Polyvinylacetale gemäß Anspruch 1 bis 5 als Folie in Sicherheitsgläsern und als akustische Folie.

8. Verwendung der weich-modifizierten Polyvinylacetale gemäß Anspruch 1 bis 5 als Bindemittel in Druckfarben, Primern und Korrosionsschutzmitteln.

9. Verwendung der weich-modifizierten Polyvinylacetale gemäß Anspruch 1 bis 5 als Bindemittel in der Keramikindustrie.

10. Verwendung der weich-modifizierten Polyvinylacetale gemäß Anspruch 1 bis 5 als Bindemittel für Keramikpulver und Metallpulver im Spritzguß.

11. Verwendung der weich-modifizierten Polyvinylacetale gemäß Anspruch 1 bis 5 als Bindemittel für die Innenbeschichtung von Dosen.

12. Verwendung der weich-modifizierten Polyvinylacetale gemäß Anspruch 1 bis 5 als Bindemittel für Glasfaser.

## Claims

1. Softness-modified polyvinyl acetal resins obtainable via hydrolysis of copolymers composed of vinyl acetate and of one or more tertiary vinyl esters of alpha-branched monocarboxylic acids having from 9 to 15 carbon atoms, which contain, based on the total weight of the monomers, from 5 to 60% by weight of tertiary vinyl ester, and subsequent acetalization, with one or more aliphatic aldehydes having from 1 to 6 carbon atoms, of the hydrolysis products having vinyl alcohol units.

2. Softness-modified polyvinyl acetal resins according to Claim 1, **characterized in that** the tertiary vinyl esters used of alpha-branched monocarboxylic acids are those having from 9 to 11 carbon atoms.

3. Softness-modified polyvinyl acetal resins according to Claim 1 or 2, **characterized in that** the acetalization process uses acetaldehyde, butyraldehyde or a mixture of these.

4. Softness-modified polyvinyl acetal resins according to any of Claims 1 to 3, comprising
a) from 20 to 70% by weight of vinyl acetal units,
b) from 5 to 30% by weight of vinyl alcohol units,
c) from 5 to 60% by weight of tert. vinyl ester units, and
d) from 0.5 to 10% by weight of vinyl acetate units,
where in each case the % by weight data give a total of 100% by weight.

5. Softness-modified polyvinyl acetal resins according to any of Claims 1 to 4, **characterized in that**, based on the total weight of the comonomers, from 1 to 5% by weight of comonomers containing carboxy groups and/or containing amide groups are also copolymerized.

6. Process for preparation of softness-modified polyvinyl acetals according to any of Claims 1 to 5 via hydrolysis of copolymers composed of vinyl acetate and of one or more tertiary vinyl esters of alpha-branched monocarboxylic acids having from 9 to 15 carbon atoms, which contain, from 5 to 60% by weight of tertiary vinyl ester, and subsequent acetalization, with one or more aliphatic aldehydes having from 1 to 6 carbon atoms, of the hydrolysis products having vinyl alcohol units, with acid catalysis in an aqueous and/or organic medium.

7. Use of the softness-modified polyvinyl acetals according to any of Claims 1 to 5 as a foil in safety glass or as an acoustic foil.

8. Use of the softness-modified polyvinyl acetals according to any of Claims 1 to 5 as binder in printing inks, in primers or in corrosion-protection compositions.

9. Use of the softness-modified polyvinyl acetals according to any of Claims 1 to 5 as binder in the ceramic industry.

10. Use of the softness-modified polyvinyl acetals according to any of Claims 1 to 5 as binder for ceramic powders and metal powders in injection moulding.

11. Use of the softness-modified polyvinyl acetals according to any of Claims 1 to 5 as binder for the internal coating of cans.

12. Use of the softness-modified polyvinyl acetals according to any of Claims 1 to 5 as binder for glass fibre.

## Revendications

1. Résines de polyvinylacétal à souplesse modifiée, pouvant être obtenues par saponification de copolymères d'acétate de vinyle et d'un ou de plusieurs esters tertiaires vinyliques d'acides monocarboxyliques ramifiés en position alpha comprenant 9 à 15 atomes de carbone, qui contiennent 5 à 60% en poids, par rapport au poids total des monomères, d'esters tertiaires de vinyle, et acétalisation consécutive des produits de saponification présentant des unités de type alcool vinylique avec un ou plusieurs aldéhydes aliphatiques comprenant 1 à 6 atomes de carbone.

2. Résines de polyvinylacétal à souplesse modifiée selon la revendication 1, **caractérisées en ce qu'**on utilise, comme esters tertiaires vinyliques d'acides monocarboxyliques ramifiés en position alpha ceux présentant 9 à 11 atomes de carbone.

3. Résines de polyvinylacétal à souplesse modifiée selon la revendication 1 ou 2, **caractérisées en ce qu'**on utilise pour l'acétalisation de l'acétaldéhyde, du butyraldéhyde ou leurs mélanges.

4. Résines de polyvinylacétal à souplesse modifiée selon les revendications 1 à 3, contenant
a) 20 à 70% en poids d'unités de type vinylacétal,
b) 5 à 30% en poids d'unités de type alcool vinylique,
c) 5 à 60% en poids d'unités de type ester tertiaire de vinyle, et
d) 0,5 à 10% en poids d'unités de type acétate de vinyle,
les indications en % en poids s'ajoutant à chaque fois à 100% en poids.

5. Résines de polyvinylacétal à souplesse modifiée selon les revendications 1 à 4, **caractérisées en ce qu'**on copolymérise encore 1 à 5% en poids, par rapport au poids total des comonomères, de comonomères contenant des groupes carboxyle et/ou amide.

6. Procédé pour la préparation de polyvinylacétals à souplesse modifiée selon les revendications 1 à 5, par saponification de copolymères d'acétate de vinyle et d'un ou de plusieurs esters tertiaires vinyliques d'acides monocarboxyliques ramifiés en position alpha comprenant 9 à 15 atomes de carbone, qui contiennent 5 à 60% en poids d'esters tertiaires de vinyle, et acétalisation consécutive des produits de saponification présentant des unités de type alcool vinylique avec un ou plusieurs aldéhydes aliphatiques comprenant 1 à 6 atomes de carbone sous une catalyse acide dans un milieu aqueux et/ou organique.

7. Utilisation des polyvinylacétals à souplesse modifiée selon les revendications 1 à 5 comme feuille dans des verres de sécurité et comme feuille acoustique.

8. Utilisation des polyvinylacétals à souplesse modifiée selon les revendications 1 à 5 comme liants dans des encres d'imprimerie, des apprêts et des agents de protection contre la corrosion.

9. Utilisation des polyvinylacétals à souplesse modifiée selon les revendications 1 à 5 comme liants dans l'industrie des céramiques.

10. Utilisation des polyvinylacétals à souplesse modifiée selon les revendications 1 à 5 comme liants pour les poudres céramiques et les poudres métalliques dans le moulage par injection.

11. Utilisation des polyvinylacétals à souplesse modifiée selon les revendications. 1 à 5 comme liants pour le revêtement interne de boîtes.

12. Utilisation des polyvinylacétals à souplesse modifiée selon les revendications 1 à 5 comme liants pour les fibres de verre.
